# EUROPÄISCHE PATENTANMELDUNG

(11) **EP 3 511 188 A1**
(43) Veröffentlichungstag der Anmeldung: **17.07.2019**
(21) Anmeldenummer: 18020011.5
(22) Anmeldetag: 10.01.2018
(51) Int. Cl.: B60K 15/03, F17C 1/00

(54) **VERFAHREN UND SYSTEM ZUR BESTIMMUNG EINER KRAFTSTOFFMASSE**

(71) Anmelder: Linde Aktiengesellschaft, 80331 München (DE)
(72) Erfinder: Adler, Robert, 2201 Gerasdorf (AT); Dorner, Sascha, 2440 Gramatneusiedl (AT); Nagl, Christoph, 2534 Alland (AT); Gruber, Sarah, 2380 Perchtoldsdorf (AT)

(57) **Zusammenfassung**

Die Erfindung betrifft ein Verfahren und ein System (100) zur Bestimmung einer Kraftstoffmasse eines Kraftstoffs (K), wobei der Kraftstoff (K) in einem ersten Teilraum (101) eines Kraftstoffbehälters (1) bereitgestellt wird, wobei der erste Teilraum (101) durch einen Trennerkolben (2) von einem zweiten Teilraum (102) getrennt ist, wobei in den zweiten Teilraum (102) ein Hydraulikfluid (H) eingeleitet bzw. aus diesem abgezogen wird, wobei sich ein zweites Volumen (V2) des zweiten Teilraums (102) unter Änderung einer Position des Trennerkolbens (2) in dem Kraftstoffbehälter (1) ändert, so dass sich ein erstes Volumen (V₁) des ersten Teilraums (101) durch die Positionsänderung des Trennerkolbens (2) ändert, und wobei ein Druck (p) und eine Temperatur (T) des in dem ersten Teilraum (101) befindlichen Kraftstoffs (K) gemessen werden, und wobei das erste Volumen (V₁) des ersten Teilraums (101) ermittelt wird, und wobei anhand des Drucks (p), der Temperatur (T) und des ersten Volumens (V₁) die Kraftstoffmasse des Kraftstoffs (K) bestimmt wird.

## Beschreibung

Die Erfindung betrifft ein Verfahren und ein System zur Bestimmung einer Kraftstoffmasse eines Kraftstoffs, insbesondere eines gasförmigen Kraftstoffs, z.B. Wasserstoff oder Erdgas, in einem Kraftstoffbehälter.

Nach dem Stand der Technik sind Fahrzeuge bekannt, die mit gasförmigen Kraftstoffen wie z.B. Wasserstoff oder Erdgas angetrieben werden.

Außerdem sind Tankstellen zur Betankung von Fahrzeugen, z.B. mit Wasserstoff als Kraftstoff, bekannt. Zur Speicherung an solchen Tankstellen (auch als Befüllstationen bezeichnet) werden die entsprechenden Kraftstoffe insbesondere mit hydraulisch angetriebenen Verdichtersystemen verdichtet und anschließend z.B. in sogenannten Kolbenspeichern als verdichtetes Gas gespeichert.

Derartige Kolbenspeicher weisen insbesondere einen Kraftstoffbehälter auf, der von einem Trennerkolben in einen ersten Teilraum zur Aufnahme des verdichteten gasförmigen Kraftstoffs und einen zweiten Teilraum zur Aufnahme eines Hydraulikfluids, z.B. eines Öls, getrennt wird. Derartige Kolbenspeicher, werden auch als Konstantdruckspeicher bezeichnet.

Dieser Trennerkolben kann z.B. mittels Einleiten von Hydraulikfluid in den zweiten Teilraum oder Abziehen von Hydraulikfluid aus dem zweiten Teilraum derart bewegt werden, dass sich das Volumen des ersten Teilraums verändert, so dass z.B. Kraftstoff in den ersten Teilraum eingeleitet oder aus dem ersten Teilraum ausgegeben werden kann.

Beim Betankten von gasbetriebenen, insbesondere wasserstoffgetriebenen, Fahrzeugen ergibt sich das Problem, das die Infrastruktur für Kraftstofftankstellen, insbesondere Wasserstofftankstellen aktuell in den meisten Regionen noch unzureichend ausgebaut ist, so dass der Umstieg auf gasförmige Kraftstoffe für einen Großteil der Bevölkerung nachteilig ist.

Nach dem Stand der Technik sind zwar Heimbefüllsysteme für gasförmige Kraftstoffe wie Wasserstoff bekannt, diese erlauben jedoch nur geringe Durchflussmengen, wodurch die Einhaltung herstellerspezifischer Vorgaben (z.B. 1 g/s) nur schwer möglich ist.

Aus diesem Grund wäre es wünschenswert, die vorrätige Kraftstoffmasse, insbesondere in Kleinbefüllanlagen für Wasserstoff, bestimmen zu können.

Daher ist es die Aufgabe der vorliegenden Erfindung, ein Verfahren und ein System zur Bestimmung einer Kraftstoffmasse zur Verfügung zu stellen, welches bzw. welche bezüglich der zuvor genannten Nachteile des Standes der Technik verbessert bzw. vorteilhaft ist bzw. sind.

Diese Aufgabe wird durch das Verfahren nach Anspruch 1 sowie das System nach Anspruch 9 gelöst. Vorteilhafte Ausführungsformen des Verfahrens sind in den Unteransprüchen 2 bis 8 angegeben und eine vorteilhafte Ausführungsform des Systems ist in dem Unteranspruch 10 angegeben. Die Erfindung wird im Folgenden beschrieben.

Ein erster Aspekt der Erfindung betrifft ein Verfahren zur Bestimmung einer Kraftstoffmasse eines, insbesondere gasförmigen, Kraftstoffs, wobei der Kraftstoff in einem ersten Teilraum eines Kraftstoffbehälters (auch als Speicher bezeichnet) bereitgestellt wird, wobei der erste Teilraum durch einen in dem Kraftstoffbehälter beweglich angeordneten Trennerkolben von einem zweiten Teilraum des Kraftstoffbehälters, insbesondere fluiddicht, getrennt ist, und wobei in den zweiten Teilraum ein Hydraulikfluid, insbesondere ein Öl, eingeleitet wird, wobei sich ein zweites Volumen des zweiten Teilraums unter Änderung einer Position des Trennerkolbens in dem Kraftstoffbehälter vergrößert, so dass sich ein erstes Volumen des ersten Teilraums durch die Positionsänderung des Trennerkolbens verkleinert und/oder aus dem zweiten Teilraum ein Hydraulikfluid, insbesondere ein Öl, abgezogen wird, wobei sich das zweite Volumen des zweiten Teilraums unter Änderung einer Position des Trennerkolbens verkleinert und sich das erste Volumen des ersten Teilraums durch die Positionsänderung des Trennerkolbens vergrößert, und wobei ein Druck und eine Temperatur des in dem ersten Teilraum befindlichen Kraftstoffs gemessen werden, und wobei das erste Volumen des ersten Teilraums ermittelt wird, und wobei anhand des gemessenen Drucks, der gemessenen Temperatur und des ermittelten ersten Volumens des ersten Teilraums die Kraftstoffmasse des in dem ersten Teilraum befindlichen Kraftstoffs bestimmt wird.

Das erfindungsgemäße Verfahren hat insbesondere den Vorteil, dass aufgrund der ermittelten Kraftstoffmasse gezielt entschieden werden kann, welche Befüllanlagen eine ausreichende Kraftstoffmenge aufweisen, so dass sie von mit dem Kraftstoff angetriebenen Fahrzeugen sinnvollerweise angefahren werden können, um eine ausreichende Menge an Kraftstoff für eine benötigte Reichweite zu tanken. Durch die mittels des Verfahrens bestimmten Kraftstoffmassen können Fahrzeuge gezielt entsprechend der gewünschten Tankmenge zum passenden Refuellersystem (bzw. zur passenden Befüllanlage) geleitet werden. Dies ermöglicht eine bedarfsgerechte Versorgung der Fahrzeuge.

Gemäß einer Ausführungsform wird das zweite Volumen des zweiten Teilraums ermittelt, wobei anhand des ermittelten zweiten Volumens des zweiten Teilraums das erste Volumen des ersten Teilraums ermittelt wird.

Gemäß einer weiteren Ausführungsform wird das Hydraulikfluid mittels einer Pumpe in den zweiten Teilraum eingeleitet und/oder das Hydraulikfluid wird mittels der Pumpe aus dem zweiten Teilraum abgezogen, wobei ein Fördervolumen der Pumpe ermittelt wird, und wobei anhand des ermittelten Fördervolumens das zweite Volumen des zweiten Teilraums ermittelt wird.

Gemäß einer weiteren Ausführungsform wird die Pumpe mittels eines Motors, insbesondere eines Elektromotors, angetrieben, wobei die Umdrehungen des Motors erfasst werden, und wobei anhand der erfassten Umdrehungen das Fördervolumen der Pumpe ermittelt wird.

Zu diesem Zweck werden insbesondere ausgehend von der Kolbenendlage die Umdrehungen des Motors, bzw. die Umdrehungen der Pumpe, aufgezeichnet, und entsprechend der volumetrischen Förderleistung und zuvor bestimmter Leitungsvolumina wird das zweite Volumen des zweiten Teilraums bestimmt. Hieraus kann dann das erste Volumen des ersten Teilraums berechnet werden. Dieses Volumen in Kombination mit den Druckwerten des Kraftstoffs in dem ersten Teilraum (z.B. Messwerte eines Drucksensors bzw. Drucktransmitters) und den Temperaturwerten des Kraftstoffs in dem ersten Teilraum (z.B. Messwerte eines Temperatursensors bzw. Temperaturtransmitters) und den, z.B. in einer Recheneinheit oder einem Speicher hinterlegten Stoffdaten (bzw. thermodynamischen Parametern des Kraftstoffs) erlaubt den Rückschluss auf die Masse des in dem ersten Teilraum befindlichen Kraftstoffs (bzw. der sogenannten Kraftstoffspeichermasse).

Gemäß einer weiteren Ausführungsform wird eine Position des Trennerkolbens in dem Kraftstoffbehälter ermittelt, wobei anhand der ermittelten Position des Trennerkolbens das erste Volumen des ersten Teilraums ermittelt wird.

Gemäß einer weiteren Ausführungsform wird ein Abstand zwischen dem Trennerkolben und einer Wandung des Kraftstoffbehälters ermittelt, wobei anhand des ermittelten Abstands die Position des Trennerkolbens in dem Kraftstoffbehälter ermittelt wird.

Gemäß einer weiteren Ausführungsform wird der Abstand zwischen dem Trennerkolben und der Wandung des Kraftstoffbehälters mittels einer Ultraschallabstandsmessung ermittelt.

Hierbei werden insbesondere mittels eines Ultraschallemitters Ultraschallwellen in dem ersten Teilraum oder in dem zweiten Teilraum des Kraftstoffbehälters erzeugt. Diese Ultraschallwellen werden insbesondere von dem Trennerkolben und/oder von mindestens einer Wandung des Kraftstoffbehälters reflektiert. Die reflektierten Ultraschallwellen können dann mittels eines Ultraschalldetektors detektiert werden. Dann kann in bekannter Weise über die Laufzeit der Ultraschallwellen unter Berücksichtigung der Eigenschaften des in dem jeweiligen Teilraum befindlichen Mediums, z.B. des in dem zweiten Teilraum vorhandenen Hydraulikfluids, der Abstand zwischen dem Trennerkolben und der Wandung bestimmt werden.

Bei bekannter Geometrie des Innenraums des Kraftstoffbehälters kann dann aus dem ermittelten Abstand das Volumen des jeweiligen Teilraums und damit auch das Volumen des jeweils anderen Teilraums bestimmt werden.

Gemäß einer weiteren Ausführungsform wird mittels der bestimmten Kraftstoffmasse eine Reichweite eines mittels des in dem Kraftstoffbehälter gespeicherten Kraftstoffs angetriebenen Fahrzeugs bestimmt.

Das besagte Fahrzeug ist mittels des Kraftstoffs angetrieben. Dabei kann z.B. der Kraftstoffbehälter ein Tank sein, der mit dem Fahrzeug mitgeführt wird, oder der Kraftstoffbehälter kann Teil einer stationären Befüllanlage sein, mittels derer das Fahrzeug betankt wird.

Ein zweiter Aspekt der Erfindung betrifft ein System zur Bestimmung einer Kraftstoffmasse, insbesondere mittels des Verfahrens nach dem ersten Aspekt der Erfindung, wobei das System zumindest die folgenden Komponenten aufweist: einen Kraftstoffbehälter, der einen ersten Teilraum und einen mittels eines Trennerkolbens von dem ersten Teilraum getrennten zweiten Teilraum aufweist, wobei der erste Teilraum dazu ausgebildet ist, einen, insbesondere gasförmigen, Kraftstoff aufzunehmen, und wobei der zweite Teilraum dazu ausgebildet ist, ein Hydraulikfluid aufzunehmen, wobei ein zweites Volumen, insbesondere das zweite Volumen, des zweiten Teilraums durch Einleiten eines Hydraulikfluids, insbesondere eines Öls, in den zweiten Teilraum unter Änderung einer Position des Trennerkolbens in dem Kraftstoffbehälter vergrößerbar ist, so dass ein erstes Volumen, insbesondere das erste Volumen, des ersten Teilraums durch die Positionsänderung des Trennerkolbens verkleinerbar ist und/oder das zweite Volumen des zweiten Teilraums durch Abziehen des Hydraulikfluids, insbesondere des Öls, aus dem zweiten Teilraum unter Änderung der Position des Trennerkolbens in dem Kraftstoffbehälter verkleinerbar ist, so dass das erste Volumen des ersten Teilraums durch die Positionsänderung des Trennerkolbens vergrößerbar ist, eine Vorrichtung zur Druckmessung, die dazu ausgebildet ist, einen Druck eines in dem ersten Teilraum befindlichen Kraftstoffs zu messen, eine Vorrichtung zur Temperaturmessung, die dazu ausgebildet ist, eine Temperatur eines in dem ersten Teilraum befindlichen Kraftstoffs zu messen, eine Vorrichtung zur Ermittlung eines Volumens, die dazu ausgebildet ist, das erste Volumen des ersten Teilraums zu ermitteln, eine Recheneinheit, die dazu ausgebildet ist, insbesondere automatisch, anhand des gemessenen Drucks des in dem ersten Teilraum befindlichen Kraftstoffs, der gemessenen Temperatur des in dem ersten Teilraum befindlichen Kraftstoffs und des ermittelten ersten Volumens des ersten Teilraums die Kraftstoffmasse des in dem ersten Teilraum befindlichen Kraftstoffs zu bestimmen, wobei insbesondere die Recheneinheit weiterhin dazu ausgebildet ist, mittels der bestimmten Kraftstoffmasse eine Reichweite eines mittels des Kraftstoffs angetriebenen Fahrzeugs zu bestimmten.

Gemäß einer Ausführungsform weist das System zur Bestimmung einer Kraftstoffmasse weiterhin eine Vorrichtung zur Datenaufzeichnung auf, die dazu eingerichtet ist, zumindest die mittels der Recheneinheit bestimmte Kraftstoffmasse aufzuzeichnen.

Insbesondere ist die Vorrichtung zur Datenaufzeichnung weiterhin dazu eingerichtet, den gemessenen Druck des in dem ersten Teilraum befindlichen Kraftstoffs, die gemessene Temperatur des in dem ersten Teilraum befindlichen Kraftstoffs und/oder das ermittelte erste Volumens des ersten Teilraums, aufzuzeichnen.

Gemäß einer weiteren Ausführungsform weist das System zur Bestimmung einer Kraftstoffmasse weiterhin eine Vorrichtung zur drahtlosen Kommunikation auf, die dazu eingerichtet ist, zumindest die mittels der Recheneinheit bestimmte Kraftstoffmasse drahtlos an eine Empfängereinrichtung zu übermitteln.

Insbesondere ist die Vorrichtung zur drahtlosen Kommunikation weiterhin dazu eingerichtet, den gemessenen Druck des in dem ersten Teilraum befindlichen Kraftstoffs, die gemessene Temperatur des in dem ersten Teilraum befindlichen Kraftstoffs und/oder das ermittelte erste Volumen des ersten Teilraums drahtlos an die Empfängereinrichtung zu übermitteln.

Gemäß einer weiteren Ausführungsform weist das System zur Bestimmung einer Kraftstoffmasse weiterhin eine Ausgabeeinrichtung auf, die dazu eingerichtet ist, zumindest eine mittels der Recheneinheit bestimmte Reichweite eines mittels des Kraftstoffs angetriebenen Fahrzeugs z.B. optisch und/oder akustisch auszugeben.

Gemäß einer weiteren Ausführungsform ist die Vorrichtung zur Ermittlung eines Volumens dazu ausgebildet, das zweite Volumen des zweiten Teilraums zu ermitteln, wobei die Recheneinheit dazu eingerichtet ist, anhand des ermittelten zweiten Volumens des zweiten Teilraums das erste Volumen des ersten Teilraums zu ermitteln. Dabei kann selbstverständlich auch das ermittelte zweite Volumen mittels der Vorrichtung zur Datenaufzeichnung aufgezeichnet werden und/oder mittels der Vorrichtung zur drahtlosen Kommunikation drahtlos an die Empfängereinheit übermittelt werden.

Gemäß einer weiteren Ausführungsform ist die Vorrichtung zur Ermittlung eines Volumens dazu ausgebildet, eine Position des Trennerkolbens in dem Kraftstoffbehälter zu ermitteln, wobei die Recheneinheit dazu eingerichtet ist, anhand der ermittelten Position des Trennerkolbens das erste Volumen des ersten Teilraums zu ermitteln.

Weitere Ausführungsbeispiele der Erfindung werden im Folgenden anhand von Zeichnungen beschrieben. Dabei zeigen
- Fig. 1: eine schematische Darstellung eines erfindungsgemäßen Systems zur Bestimmung einer Kraftstoffmasse im Längsschnitt gemäß einer ersten Ausführungsform mit Ermittlung des Kraftstoffvolumens über das Pumpenfördervolumen;
- Fig. 2: eine schematische Darstellung eines erfindungsgemäßen Systems zur Bestimmung einer Kraftstoffmasse im Längsschnitt gemäß einer zweiten Ausführungsform mit Ermittlung des Kraftstoffvolumens mittels Ultraschallabstandsmessung.

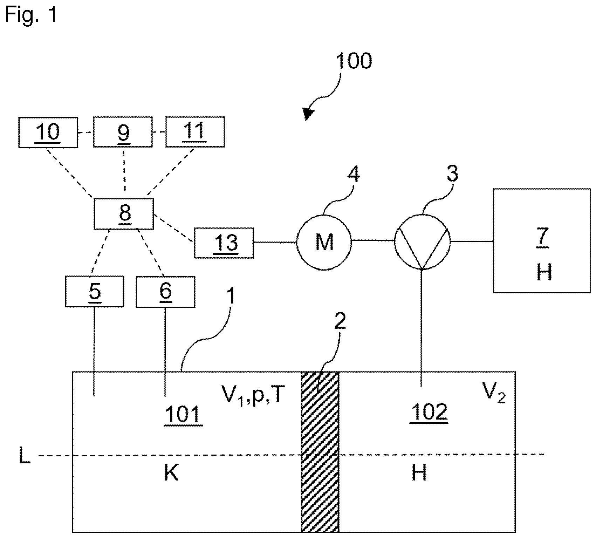

Fig. 1 zeigt ein erfindungsgemäßes System 100 zur Bestimmung der Kraftstoffmasse gemäß einer ersten Ausführungsform im Längsschnitt bezüglich einer Längsachse L.

Das System 100 weist einen Kraftstoffbehälter 1 auf, der einen Innenraum bildet, in dem ein Trennerkolben 2 entlang der Längsachse L beweglich positioniert bzw. gelagert ist. Dabei trennt der Trennerkolben 2 den Innenraum des Kraftstoffbehälters 1 entlang der Längsachse L in einen ersten Teilraum 101 zur Aufnahme eines, insbesondere gasförmigen, Kraftstoffs K (z.B. Wasserstoff oder Erdgas) und einen zweiten Teilraum 102 zur Aufnahme eines Hydraulikfluids H, z.B. eines Öls.

Der Trennerkolben 2 liegt insbesondere dichtend an einer Innenwand des Kraftstoffbehälters 1 an, so dass der erste Teilraum 101 fluiddicht von dem zweiten Teilraum 102 getrennt ist. An dem Trennerkolben 2 kann weiterhin z.B. ein Dichtungsring angeordnet sein, der die Abdichtung zwischen dem ersten Teilraum 101 und dem zweiten Teilraum 102 realisiert.

Der erste Teilraum 101 ist mit einem Kraftstoff K, insbesondere einem gasförmigen Kraftstoff K, gefüllt. Bei dem Kraftstoffbehälter 1 kann es sich z.B. um einen Tank eines Fahrzeugs handeln, das mit dem Kraftstoff angetrieben wird. Alternativ dazu kann es sich bei dem Kraftstoffbehälter 1 um einen Speicher einer Befüllstation für Fahrzeuge handeln, die mit dem Kraftstoff K angetrieben werden.

Der Kraftstoff K ist insbesondere Wasserstoff (H₂) oder Erdgas.

Weiterhin kann der Kraftstoffbehälter 1 mindestens einen mit dem ersten Teilraum 101 in Strömungsverbindung stehenden Stutzen zum Befüllen und/oder Entleeren des Kraftstoffbehälters 1 aufweisen (hier nicht dargestellt). Ein solcher Stutzen kann z.B. mit einem Kraftstoffspeicher einer Befüllstation in Strömungsverbindung gebracht werden, um den Kraftstoffbehälter 1 zu befüllen (für den Fall, dass der Kraftstoffbehälter 1 ein Tank eines Fahrzeugs ist) bzw. mit einem Tank eines Fahrzeugs in Strömungsverbindung gebracht werden, um den Tank aus dem Kraftstoffbehälter 1 zu befüllen (für den Fall, dass der Kraftstoffbehälter 1 ein Speicher einer Befüllstation ist).

Der zweite Teilraum 102 ist mit einem Hydraulikfluid H gefüllt und steht über eine Pumpe 3 in Strömungsverbindung mit einem Hydraulikfluidbehälter 7, so dass mittels der Pumpe 3 Hydraulikfluid H aus dem Hydraulikfluidbehälter 7 in den zweiten Teilraum 102 eingeleitet oder aus dem zweiten Teilraum 102 abgezogen und in den Hydraulikfluidbehälter 7 eingeleitet werden kann. Auf diese Weise kann das zweite Volumen V₂ des zweiten Teilraums 102 mittels der Pumpe 3 verändert werden, wobei sich der Trennerkolben 2 entlang der Längsachse L bewegt (in der Darstellung der Fig. 1 nach links).

Somit wird bei einer Vergrößerung des zweiten Volumens V₂ des zweiten Teilraums 102 das erste Volumen V₁ des ersten Teilraums 101 entsprechend verringert. Dadurch kann z.B. Kraftstoff K aus dem ersten Teilraum 101 ausgegeben werden, um z.B. einen Tank eines Fahrzeugs zu befüllen.

Die Pumpe 3 zum Fördern des Hydraulikfluids H ist von einem Motor 4, z.B. einem Elektromotor, getrieben. Das heißt, der Motor 4 kann z.B. ein Pumpenrad in Drehbewegung versetzen, wenn die Pumpe 3 als Kreiselpumpe ausgebildet ist. Alternativ dazu kann der Motor 4 z.B. auch einen Kolben der Pumpe 3 in periodische translatorische Bewegung versetzen, wenn die Pumpe 3 als Hubkolbenpumpe ausgebildet ist.

Gemäß der ersten Ausführungsform der vorliegenden Erfindung ist eine Vorrichtung 13 zur Ermittlung eines Volumens, z.B. eine Positionserfassungsvorrichtung des Motors 4 vorgesehen, wobei die Vorrichtung 13 dazu ausgebildet ist, die Umdrehungen des Motors 4 zu erfassen, so dass anhand der erfassten Umdrehungen das Fördervolumen der Pumpe 3 ermittelt werden kann. Dadurch können z.B. ausgehend von der Kolbenendlage die Umdrehungen des Motors 4 bestimmt (die gegebenenfalls bei Verwendung einer Kreiselpumpe mit den Umdrehungen der Pumpe 3 übereinstimmen können) und entsprechend der volumetrischen Förderleistung und der zuvor bestimmten Leitungsvolumina (z.B. der Fluidleitungen zwischen Pumpe 3 und zweitem Teilraum 102) das zweite Volumen V₂ des zweiten Teilraums 102 bestimmt werden.

Ist das zweite Volumen V₂ des zweiten Teilraums 102 bekannt, kann auch auf einfache Weise, insbesondere gemäß der Formel V₁=V_{ges}-V₂ das erste Volumen V₁ bestimmt werden, wobei V_{ges} das Gesamtvolumen des Kraftstoffbehälters 1 bezeichnet.

Das erfindungsgemäße System 100 weist weiterhin eine Vorrichtung 5 zur Druckmessung, z.B. einen Drucksensor, und eine Vorrichtung 6 zur Temperaturmessung, z.B. einen Temperatursensor, auf, wobei die Vorrichtung 5 zur Druckmessung dazu ausgebildet ist, einen Druck p des in dem ersten Teilraum 101 des Kraftstoffbehälters 1 befindlichen Kraftstoffs K zu messen, und wobei die Vorrichtung 6 zur Temperaturmessung dazu ausgebildet ist, eine Temperatur T des in dem ersten Teilraum 101 des Kraftstoffbehälters 1 befindlichen Kraftstoffs K zu messen. Dabei sind die Vorrichtung 5 zur Druckmessung und die Vorrichtung 6 zur Temperaturmessung insbesondere in dem ersten Teilraum 101 angeordnet, so dass sie in direktem Kontakt mit dem Kraftstoff K stehen.

Mittels der durch die Vorrichtung 5 zur Druckmessung und die Vorrichtung 6 zur Temperaturmessung erhaltenen Druck- und Temperaturwerte kann unter Verwendung des ermittelten ersten Volumens V₁ des ersten Teilraums 101 bei bekannter Stoffzusammensetzung des Kraftstoffs K die Kraftstoffmasse des in dem ersten Teilraum 101 befindlichen Kraftstoffs K bestimmt werden.

Wie in Fig. 1 gezeigt, sind die Vorrichtung 5 zur Druckmessung, die Vorrichtung 6 zur Temperaturmessung und die Vorrichtung 13 zur Ermittlung eines Volumens, insbesondere die Positionserfassungvorrichtung des Motors 4, jeweils über eine Datenleitung (in Fig. 1 gestrichelt dargestellt) mit einer Recheneinheit 8 verbunden, so dass die von der Vorrichtung 5 zur Druckmessung gemessenen Druckdaten, die von der Vorrichtung 6 zur Temperaturmessung gemessenen Temperaturdaten und die von der Vorrichtung 13 zur Ermittlung eines Volumens ermittelten Volumendaten an die Recheneinheit 8 übertragen werden und von der Recheneinheit 8 verarbeitet werden können.

Dabei ist die Recheneinheit 8 dazu eingerichtet, insbesondere automatisch, mittels der Druckdaten, der Temperaturdaten und der Volumendaten die Kraftstoffmasse des in dem ersten Teilraum 101 befindlichen Kraftstoffs K zu bestimmen. Weiterhin kann die Recheneinheit 8 dazu eingerichtet sein, anhand der ermittelten Kraftstoffmasse die Reichweite eines Fahrzeugs zu bestimmen, das mit dem in dem Kraftstoffbehälter 1 befindlichen Kraftstoff K der ermittelten Masse betankt wird.

Die Recheneinheit 8 ist über weitere Datenleitungen mit einer Vorrichtung 9 zur Datenaufzeichnung, z.B. einem Speicher, verbunden, wobei die Vorrichtung 9 zur Datenaufzeichnung dazu ausgebildet ist, die Kraftstoffmassedaten, und insbesondere auch die Druckdaten, die Temperaturdaten und/oder die Volumendaten zu speichern.

In der Recheneinheit 8 und/oder in der Vorrichtung 9 zur Datenaufzeichnung sind außerdem insbesondere thermodynamische Parameter des verwendeten Kraftstoffs K gespeichert, die es der Recheneinheit 8 erlauben, mittels der Druckdaten, Temperaturdaten und Volumendaten die Kraftstoffmasse des Kraftstoffs K zu bestimmen. Zudem kann in der Recheneinheit 8 und/oder in der Vorrichtung 9 zur Datenaufzeichnung der durchschnittliche Verbrauch des Kraftstoffs K beim Antrieb eines bestimmten Fahrzeugs mit dem Kraftstoff K gespeichert sein. Anhand des durchschnittlichen Verbrauchs und der bestimmten Kraftstoffmasse kann dann mittels der Recheneinheit 8 die Reichweite eines mit dem Kraftstoff K angetriebenen Fahrzeugs bestimmt werden.

Weiterhin weist das System 100 gemäß der ersten Ausführungsform eine Vorrichtung 10 zur drahtlosen Kommunikation auf, die dazu ausgebildet ist, zumindest die Kraftstoffmassedaten (insbesondere auch die Druckdaten, Temperaturdaten und/oder Volumendaten) drahtlos an eine geeignete Empfängereinrichtung zu übermitteln. Eine solche Empfängereinrichtung kann z.B. ein Smartphone, ein Tabletcomputer oder ein Bordcomputer eines Fahrzeugs sein, das mit dem Kraftstoff angetrieben wird. Die Vorrichtung 10 zur drahtlosen Kommunikation kann auch mit der Vorrichtung 9 zur Datenaufzeichnung verbunden sein, so dass auch in der Vorrichtung 9 zur Datenaufzeichnung gespeicherte Daten mittels der Vorrichtung 10 zur drahtlosen Kommunikation übermittelt werden können.

Das in Fig. 1 gezeigte System 100 weist außerdem eine Ausgabeeinrichtung 11 zur optischen und/oder akustischen Wiedergabe der ermittelten Kraftstoffmasse und/oder der ermittelten Reichweite eines mit dem Kraftstoff K angetriebenen Fahrzeugs auf. Dabei kann es sich z.B. um ein Display bzw. eine optische Anzeige handeln. Die Ausgabeeinrichtung 11 kann auch mit der Vorrichtung 9 zur Datenaufzeichnung verbunden sein, so dass auch in der Vorrichtung 9 zur Datenaufzeichnung gespeicherte Daten mittels der Ausgabeeinrichtung 11 ausgegeben werden können.

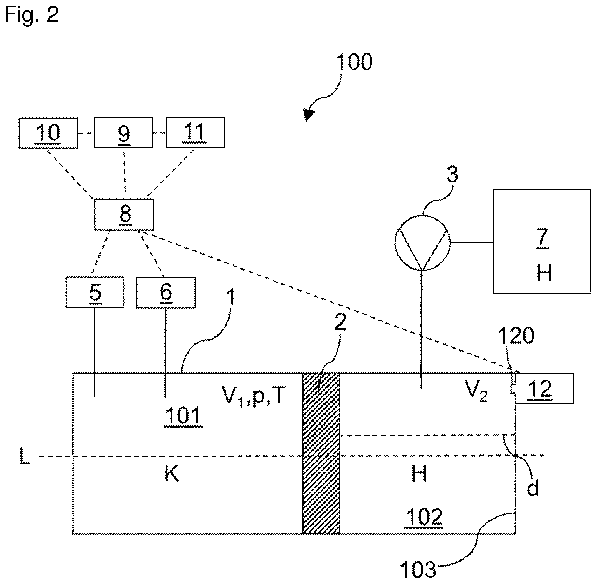

Die Fig. 2 zeigt schematisch eine zweite Ausführungsform des erfindungsgemäßen Systems 100 im Längsschnitt bezüglich der Längsachse L.

Das in Fig. 2 dargestellte System 100 ist analog zu dem in Fig. 1 gezeigten System 100 aufgebaut, weist aber statt der Vorrichtung 13 zur Ermittlung eines Volumens eine Einrichtung 12 zur Abstandsmessung auf.

Bei der Einrichtung 12 zur Abstandsmessung handelt es sich gemäß der in Fig. 2 gezeigten Ausführungsform um ein Ultraschall-Abstandsmessgerät mit einem Ultraschallemitter und -detektor 120, der in dem zweiten Teilraum 102 derart angeordnet ist, dass mittels Ultraschallwellen, die von dem Ultraschallemitter ausgesendet werden, von einer inneren Wandung 103 des Kraftstoffbehälters 1 bzw. von dem Trennerkolben 2 reflektiert werden und von dem Ultraschalldetektor detektiert werden, ein Abstand d zwischen dem Trennerkolben 2 und einer Wandung 103 des Kraftstoffbehälters 1 ermittelt werden kann.

Der Abstand d kann dabei parallel zur Längsachse L verlaufen, wobei insbesondere der Abstand d senkrecht zu einer dem zweiten Teilraum 102 zugewandten Oberfläche des Trennerkolbens 2 und/oder senkrecht zu einer Wandung 103 des Kraftstoffbehälters 1 verläuft.

Mittels der gezeigten Einrichtung 12 zur Abstandsmessung kann bei bekannter Geometrie des Innenraums des Kraftstoffbehälters 1 aus dem gemessenen Abstand d das zweite Volumen V₂ des zweiten Teilraums 102 bestimmt werden. Aus dem zweiten Volumen V₂ kann wie oben beschrieben auf einfache Weise das erste Volumen V₁ des ersten Teilraums 101 ermittelt werden.

Selbstverständlich kann die Einrichtung 12 zur Abstandsmessung auch in dem ersten Teilraum 101 angeordnet werden, so dass ein Abstand zwischen dem Trennerkolben 2 und einer Wandung, die den ersten Teilraum 101 begrenzt, bestimmt werden kann. Hierbei kann bei bekannter Geometrie des Innenraums direkt das erste Volumen V₁ des ersten Teilraums 101 bestimmt werden.

Natürlich sind außer der Ultraschall-Abstandsmessung auch andere geeignete Messprinzipien der erfindungsgemäßen Einrichtung 12 zur Abstandsmessung denkbar.

Wie in Fig. 2 mittels gestrichelter Linien dargestellt, ist eine Datenverbindung zwischen der Einrichtung 12 zur Abstandsmessung und der Recheneinheit 8 zur Übermittlung der ermittelten Abstandsdaten und/oder Volumendaten an die Recheneinheit 8 vorgesehen.

Dabei ist die Recheneinheit 8 insbesondere dazu eingerichtet, aus dem von der Einrichtung 12 zur Abstandsmessung ermittelten Abstand d das erste Volumen V₁ des ersten Teilraums 101 zu berechnen. Dazu können insbesondere in der Vorrichtung 10 zur Datenaufzeichnung geometrische Parameter des Innenraums des Kraftstoffbehälters 1 hinterlegt bzw. gespeichert sein, die es erlauben, aus dem Abstand d das Volumen V₁ des ersten Teilraums 101 zu berechnen.

Analog zu der in Fig. 1 gezeigten Ausführungsform ist auch die in Fig. 2 gezeigte Recheneinheit 8 mit einer Vorrichtung 10 zur drahtlosen Kommunikation und einer Ausgabeeinrichtung 11 verbunden.

### Bezugszeichenliste

| | |
|---|---|
| 1 | Kraftstoffbehälter |
| 2 | Trennerkolben |
| 3 | Pumpe |
| 4 | Motor |
| 5 | Vorrichtung zur Druckmessung |
| 6 | Vorrichtung zur Temperaturmessung |
| 7 | Hydraulikfluidbehälter |
| 8 | Recheneinheit |
| 9 | Vorrichtung zur Datenaufzeichnung |
| 10 | Vorrichtung zur drahtlosen Kommunikation |
| 11 | Ausgabeeinrichtung |
| 12 | Einrichtung zur Abstandsmessung |
| 13 | Vorrichtung zur Ermittlung eines Volumens |
| 100 | System zur Bestimmung einer Kraftstoffmasse |
| 101 | Erster Teilraum |
| 102 | Zweiter Teilraum |
| 103 | Wandung |
| 120 | Ultraschallemitter und -detektor |
| p | Druck |
| T | Temperatur |
| V₁ | Erstes Volumen |
| V₂ | Zweites Volumen |
| K | Kraftstoff |
| H | Hydraulikfluid |
| L | Längsachse |
| d | Abstand |

## Patentansprüche

1. Verfahren zur Bestimmung einer Kraftstoffmasse eines Kraftstoffs (K), wobei der Kraftstoff (K) in einem ersten Teilraum (101) eines Kraftstoffbehälters (1) bereitgestellt wird, und wobei der erste Teilraum (101) durch einen in dem Kraftstoffbehälter (1) beweglich angeordneten Trennerkolben (2) von einem zweiten Teilraum (102) des Kraftstoffbehälters (1) getrennt ist, und wobei
- in den zweiten Teilraum (102) ein Hydraulikfluid (H) eingeleitet wird, wobei sich ein zweites Volumen (V₂) des zweiten Teilraums (102) unter Änderung einer Position des Trennerkolbens (2) in dem Kraftstoffbehälter (1) vergrößert, so dass sich ein erstes Volumen (V₁) des ersten Teilraums (101) durch die Positionsänderung des Trennerkolbens (2) verkleinert, und/oder
- das Hydraulikfluid (H) aus dem zweiten Teilraum (102) abgezogen wird, wobei sich das zweite Volumen (V₂) unter Änderung der Position des Trennerkolbens (2) in dem Kraftstoffbehälter (1) verkleinert, so dass sich das erste Volumen (V₁) durch die Positionsänderung des Trennerkolbens (2) vergrößert,
- wobei ein Druck (p) und eine Temperatur (T) des in dem ersten Teilraum (101) befindlichen Kraftstoffs (K) gemessen werden, und wobei das erste Volumen (V₁) des ersten Teilraums (101) ermittelt wird, und wobei anhand des gemessenen Drucks (p), der gemessenen Temperatur (T) und des ermittelten ersten Volumens (V₁) des ersten Teilraums (101) die Kraftstoffmasse des in dem ersten Teilraum (101) befindlichen Kraftstoffs (K) bestimmt wird.

2. Verfahren nach Anspruch 1, wobei das zweite Volumen (V₂) des zweiten Teilraums (102) ermittelt wird, und wobei anhand des ermittelten zweiten Volumens (V₂) das erste Volumen (V₁) des ersten Teilraums (101) ermittelt wird.

3. Verfahren nach Anspruch 2, wobei das Hydraulikfluid (H) mittels einer Pumpe (3) in den zweiten Teilraum (102) eingeleitet wird oder mittels der Pumpe (3) aus dem zweiten Teilraum (102) abgezogen wird, wobei ein Fördervolumen der Pumpe (3) ermittelt wird, und wobei anhand des Fördervolumens das zweite Volumen (V₂) des zweiten Teilraums (102) ermittelt wird.

4. Verfahren nach Anspruch 3, wobei die Pumpe (3) mittels eines Motors (4), insbesondere eines Elektromotors, angetrieben wird, wobei die Umdrehungen des Motors (4) erfasst werden, und wobei anhand der erfassten Umdrehungen das Fördervolumen der Pumpe (3) ermittelt wird.

5. Verfahren nach einem der vorhergehenden Ansprüche, wobei eine Position des Trennerkolbens (2) in dem Kraftstoffbehälter (1) ermittelt wird, und wobei anhand der ermittelten Position des Trennerkolbens (2) das erste Volumen (V₁) des ersten Teilraums (101) ermittelt wird.

6. Verfahren nach Anspruch 5, wobei ein Abstand (d) zwischen dem Trennerkolben (2) und einer Wandung (103) des Kraftstoffbehälters (1) ermittelt wird, und wobei anhand des ermittelten Abstands (d) die Position des Trennerkolbens (2) in dem Kraftstoffbehälter (1) ermittelt wird.

7. Verfahren nach Anspruch 6, wobei der Abstand (d) zwischen dem Trennerkolben (2) und der Wandung (103) des Kraftstoffbehälters (1) mittels einer Ultraschallabstandsmessung ermittelt wird.

8. Verfahren nach einem der vorhergehenden Ansprüche, wobei mittels der bestimmten Kraftstoffmasse eine Reichweite eines mittels des Kraftstoffs (K) angetriebenen Fahrzeugs bestimmt wird.

9. System (100) zur Bestimmung einer Kraftstoffmasse, insbesondere mittels des Verfahrens nach einem der Ansprüche 1 bis 8, mit
- einem Kraftstoffbehälter (1), der einen ersten Teilraum (101) zur Aufnahme eines Kraftstoffs (K) und einen mittels eines Trennerkolbens (2) von dem ersten Teilraum (101) getrennten zweiten Teilraum (102) zur Aufnahme eines Hydraulikfluids (H) aufweist, wobei
- ein zweites Volumen (V₂) des zweiten Teilraums (102) durch Einleiten eines Hydraulikfluids (H) in den zweiten Teilraum (102) unter Änderung einer Position des Trennerkolbens (2) in dem Kraftstoffbehälter (1) vergrößerbar ist, so dass ein erstes Volumen (V₁) des ersten Teilraums (101) durch die Positionsänderung des Trennerkolbens (2) verkleinerbar ist, und/oder
- das zweite Volumen (V₂) durch Abziehen des Hydraulikfluids (H) aus dem zweiten Teilraum (102) unter Änderung der Position des Trennerkolbens (2) in dem Kraftstoffbehälter (1) verkleinerbar ist, so dass das erste Volumen (V₁) durch die Positionsänderung des Trennerkolbens (2) vergrößerbar ist,
- eine Vorrichtung (5) zur Druckmessung, die dazu ausgebildet ist, einen Druck (p) eines in dem ersten Teilraum (101) befindlichen Kraftstoffs (K) zu messen,
- eine Vorrichtung (6) zur Temperaturmessung, die dazu ausgebildet ist, eine Temperatur (T) eines in dem ersten Teilraum (101) befindlichen Kraftstoffs (K) zu messen,
- eine Vorrichtung (13) zur Ermittlung eines Volumens, die dazu ausgebildet ist, das erste Volumen (V₁) des ersten Teilraums (101) zu ermitteln,
- eine Recheneinheit (8), die dazu ausgebildet ist, anhand des gemessenen Drucks (p) des in dem ersten Teilraum (101) befindlichen Kraftstoffs (K), der gemessenen Temperatur (T) des in dem ersten Teilraum (101) befindlichen Kraftstoffs (K) und des ermittelten ersten Volumens (V₁) des ersten Teilraums (101) die Kraftstoffmasse des in dem ersten Teilraum (101) befindlichen Kraftstoffs (K) zu bestimmen, wobei insbesondere die Recheneinheit (8) weiterhin dazu ausgebildet ist, mittels der bestimmten Kraftstoffmasse eine Reichweite eines mittels des Kraftstoffs (K) angetriebenen Fahrzeugs zu bestimmten,
- insbesondere eine Vorrichtung (9) zur Datenaufzeichnung, die dazu eingerichtet ist, zumindest die mittels der Recheneinheit (8) bestimmte Kraftstoffmasse aufzuzeichnen,
- insbesondere eine Vorrichtung (10) zur drahtlosen Kommunikation, die dazu eingerichtet ist, zumindest die mittels der Recheneinheit (8) bestimmte Kraftstoffmasse drahtlos an eine Empfängereinrichtung zu übermitteln,
- insbesondere eine Ausgabeeinrichtung (11), die dazu eingerichtet ist, zumindest eine mittels der Recheneinheit (8) bestimmte Reichweite eines mittels des Kraftstoffs (K) angetriebenen Fahrzeugs auszugeben.

10. System (100) zur Bestimmung einer Kraftstoffmasse nach Anspruch 9,
**dadurch gekennzeichnet, dass**
- die Vorrichtung zur Ermittlung eines Volumens (13) dazu ausgebildet ist, das zweite Volumen (V₂) des zweiten Teilraums (102) zu ermitteln, wobei die Recheneinheit (8) dazu eingerichtet ist, anhand des ermittelten zweiten Volumens (V₂) das erste Volumen (V₁) des ersten Teilraums (101) zu ermitteln oder
- das System (100) zur Bestimmung einer Kraftstoffmasse eine Einrichtung zur Abstandsmessung (12) aufweist, die dazu ausgebildet ist, eine Position des Trennerkolbens (2) in dem Kraftstoffbehälter (1) zu ermitteln, wobei die Recheneinheit (8) dazu eingerichtet ist, anhand der ermittelten Position des Trennerkolbens (2) das erste Volumen (V₁) des ersten Teilraums (101) zu ermitteln.
